# FASCICULE DE BREVET EUROPEEN

(11) **EP 4 592 144 B1**
(45) Date de publication et mention de la délivrance du brevet: **27.05.2026**
(21) Numéro de dépôt: 25152632.3
(22) Date de dépôt: 17.01.2025
(51) Int. Cl.: B60R 13/04

(54) **ENJOLIVEUR DE PASSAGE DE ROUE DE VÉHICULE AUTOMOBILE**
ZIERBLENDE FÜR DEN RADKASTEN EINES KRAFTFAHRZEUGES
TRIM FOR THE WHEEL ARCH OF AN AUTOMOBILE VEHICULE

(30) Priorité: 25.01.2024 FR 2400707
(43) Date de publication de la demande: 30.07.2025
(73) Titulaire: Stellantis Auto SAS, 78300 Poissy (FR)
(72) Inventeur: BOUDAN, Julien, 91210 Draveil (FR); PERON, Rodolphe, 95220 Herblay (FR)
(74) Mandataire: BCIP

(56) Documents cités:
- EP-B1- 3 415 372
- CN-U- 212 047 604
- KR-A- 20200 038 647

## Description

L'invention se rapporte au domaine des éléments d'habillage de carrosserie d'un véhicule automobile. Plus précisément, l'invention traite de la finition d'un bord arqué délimitant la carrosserie au niveau d'un passage de roue de véhicule automobile. L'invention concerne un élément d'habillage de passage de roue de véhicule automobile. L'invention a également pour objet un véhicule automobile.

Dans un souci de qualité perçue, des garnitures agrémentent les carrosseries des véhicules automobiles. Ces garnitures ont à la fois pour but de décorer et d'enjoliver le véhicule automobile, mais également de protéger ce dernier des obstacles externes contre des chocs. Elles ont aussi pour fonction de couvrir les zones de soudures et de fixations afin de protéger ces dernières, de donner une apparence lisse au véhicule et d'améliorer son aérodynamisme. Elles évitent certains sifflements.

De façon générale, des ailes latérales sont agencées au niveau de la carrosserie de façon à couvrir les roues. Des éléments d'habillage de passages de roue, également désignés en tant qu'enjoliveurs, sont ajoutés en tant que garnitures spécifiques en bordure d'aile. Lesdits enjoliveurs sont fixés aux ailes, et à la peau de pare-chocs lorsqu'ils s'y prolongent.

Actuellement, l'assemblage des enjoliveurs sur les ailes s'effectue selon un montage direct selon une direction transversale par un opérateur. L'opérateur doit s'assurer du bon positionnement de l'enjoliveur dans les trous pilotes avant d'encliqueter l'ensemble des fixations sur l'aile latérale et le pare-chocs. Cette action est délicate puisque l'accostage requiert de la dextérité et un temps de contrôle afin de respecter un critère de positionnement. Un enjoliveur mal ajusté en position est responsable d'un défaut de qualité perçue, pouvant entrainer des problèmes de corrosion ultérieurement. Un démontage et un remontage soigneux deviennent nécessaires en ligne de production.

Le document KR20200038647A décrit un enjoliveur de passage de roue avec un système de maintien par crochet et fixation par clip. La fixation de l'enjoliveur se fait via un double système de crochet et d'agrafe. Une première partie de couplage d'aile est en forme de crochet faisant saillie vers l'aile. La première partie d'engagement d'aile est formée d'une plaque saillante et une première rainure de verrouillage est formée au niveau d'une partie limite reliée à la garniture d'aile. Cependant, cette solution de couplage d'aile reste complexe à mettre en place, puisqu'un contrôle demeure nécessaire avant d'engager les agrafes de fixation.

Le document EP3415372B1 présente un véhicule automobile comprenant : un élément latéral de carrosserie ; une portion de pare-chocs jointive à l'élément latéral de carrosserie, ledit élément et ladite portion formant un passage de roue le long duquel est disposé un enjoliveur. L'enjoliveur comprend, à une face de montage sur le passage de roue, une portion en saillie engageant dans une rainure à la jonction entre la portion de pare-chocs et l'élément latéral de carrosserie. En vue d'améliorer la mise en position de l'enjoliveur, un adhésif assure le maintien d'une première face de montage, tandis qu'une deuxième face de montage est en appui contre le garde-boue. L'enjoliveur est facilement positionné sur ses zones de fixation. Il permet un maintien optimal et résistant. Toutefois, il existe un besoin d'augmenter encore l'ergonomie d'assemblage. Le document CN 212 047 604 U divulgue un élément d'habillage de bord arqué de passage de roue de véhicule automobile conforme au préambule de la revendication 1.

L'invention a pour objectif de répondre à au moins un des problèmes ou inconvénients rencontrés dans l'art antérieur. En particulier, l'invention a pour objectif d'améliorer l'ergonomie d'assemblage d'un élément d'habillage de passage de roue de véhicule automobile. L'invention a également pour objectif d'optimiser l'ergonomie, la précision de positionnement lors de l'accostage, et le temps d'assemblage d'un enjoliveur de passage de roue de véhicule automobile.

Selon un premier aspect, l'invention propose un élément d'habillage de bord arqué de passage de roue de véhicule automobile, comprenant les caractéristiques de la revendication 1.

Préférentiellement, les moyens de fixation comprennent une lame élastique destinée à coopérer avec l'orifice de montage du passage de roue, le crochet de positionnement étant ouvert vers l'opposé de la lame élastique.

Préférentiellement, la lame élastique comprend une agrafe de fixation.

Préférentiellement, l'évidement central s'étend sur au moins une moitié verticale du crochet de positionnement.

Préférentiellement, la au moins une extrémité verticale est au moins une extrémité inférieure.

Préférentiellement, la au moins une extrémité inférieure comprend une extrémité inférieure avant et une extrémité inférieure arrière, le crochet de positionnement est un crochet de positionnement avant à l'extrémité inférieure avant ou un crochet de positionnement arrière à l'extrémité inférieure arrière
Préférentiellement, les moyens de fixation comprennent une pluralité de languettes de fixation, la pluralité de languettes de fixation comprenant une première languette de fixation, le crochet de positionnement étant formé sur ladite première languette de fixation.

Préférentiellement, les languettes de fixation sont inclinées les unes par rapport aux autres.

Préférentiellement, le crochet de positionnement comprend une butée interne et une butée externe, la butée interne étant verticalement plus haute que la buté externe.

Préférentiellement, les moyens de fixation comprennent une série de plots de fixation, le crochet de positionnement étant à distance de la série de plots de fixation.

Préférentiellement, le crochet de positionnement comprend une gorge de positionnement avec une entrée inférieure et un fond au-dessus de l'entrée inférieure.

L'invention crée une interface de pré maintien vertical qui offre un indexage en position des moyens de fixation. En étant à une extrémité verticale, le crochet est engagé sur son support afin de délester l'opérateur. Le montage devient plus simple, le risque de mauvais positionnement des moyens de fixation diminue, le contrôle de la coïncidence des moyens de positionnement n'est plus nécessaire.

Préférentiellement, les moyens de fixation comprennent des pattes de fixation.

Préférentiellement, les moyens de fixation, plus préférentiellement les pattes de fixation, comprennent des plots de fixation et des languettes de fixation ; le crochet de positionnement étant formé sur l'une des languettes de fixation.

Préférentiellement, chaque plot de fixation est plus épais que les languettes de fixation.

Préférentiellement, le bord arqué est un bord de passage de roue d'une aile latérale et/ou de peau de pare-chocs.

Préférentiellement, le crochet de positionnement est un crochet de rétention transversale.

Préférentiellement, le crochet de positionnement comprend un fond et une butée de rétention faisant saillie vers le bas depuis le fond.

Préférentiellement, la première languette de fixation est une languette de fixation inférieure.

Préférentiellement, la lame élastique est portée par ladite première languette de fixation.

Selon un autre aspect, l'invention propose un véhicule automobile comprenant : une carrosserie ; un passage de roue avec un bord arqué ; un élément d'habillage du bord arqué ; remarquable en ce que l'élément d'habillage est conforme à l'invention.

Préférentiellement, l'élément d'habillage comprend un premier matériau différent d'un deuxième matériau formant la carrosserie.

Préférentiellement, la carrosserie comprend une pluralité d'orifices de montage répartis le long du bord arqué, le crochet de positionnement étant accroché à l'un desdits orifices de montage.

Préférentiellement, la carrosserie comprend une aile latérale et une peau de pare-chocs formant le bord arqué, le crochet de positionnement étant accroché à la peau de pare-chocs.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.

La figure 1 est une vue de profil d'un véhicule automobile selon l'invention.

La figure 2 montre une portion de carrosserie de véhicule automobile selon l'invention.

La figure 3 représente un élément d'habillage de bord arqué de passage de roue de véhicule automobile selon l'invention.

La figure 4 expose un crochet de positionnement d'un élément d'habillage de passage de roue de véhicule automobile selon l'invention.

La figure 5 est une coupe d'un crochet de positionnement d'un élément d'habillage de véhicule automobile selon l'invention.

Dans la description qui suit, le terme « comprendre » est synonyme de « inclure » et n'est pas limitatif en ce qu'il autorise la présence d'autres éléments dans le véhicule automobile ou l'élément d'habillage auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage de l'élément d'habillage, à moins que le contraire ne soit mentionné explicitement.

Au travers de la description, les différentes figures utilisent les mêmes signes de référence pour désigner des entités identiques ou similaires.

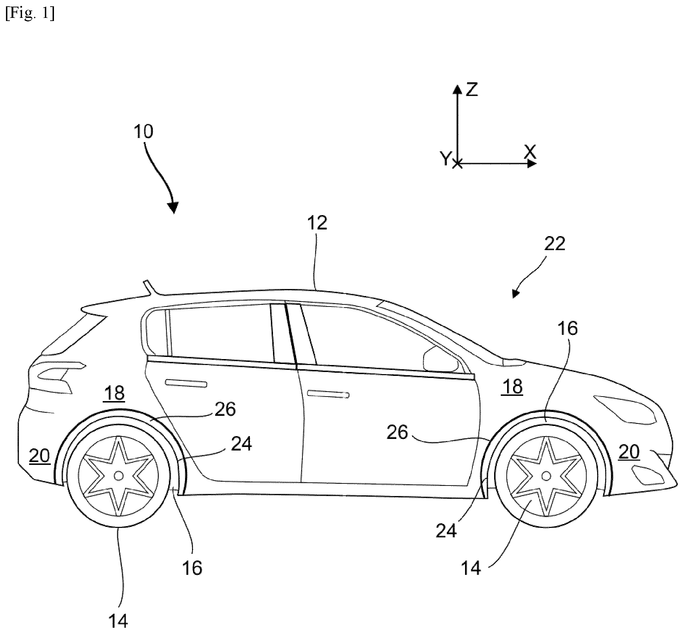

La figure 1 représente un véhicule automobile 10 selon l'invention. Le véhicule automobile 10 comprend des moyens de stockage d'énergie et au moins un moteur (non représenté) adaptés pour entraîner ledit véhicule automobile 10.

Le véhicule automobile 10 comprend une structure 12. La structure 12 forme une caisse extérieure, ou encore une ossature principale du véhicule automobile. La structure 12 délimite différents compartiments du véhicule automobile 10, dont l'habitacle passager, le coffre de chargement, le compartiment moteur (non représentés). La structure 12 peut être formée d'un assemblage de tôles embouties et soudées les unes aux autres.

La structure 12 relie différentes parties du véhicule automobile 10 dont les ouvrants. La structure 12 forme un support de montage pour le groupe motopropulseur, les systèmes de suspension, le système de direction, les systèmes de freinage qui sont reliés aux différentes roues 14.

Chaque roue 14 est reçue dans un passage de roue 16. Un passage de roue 16 forme un évidement dans la structure 12 qui y permet les mouvements verticaux et les mouvements directionnels d'une roue 14. De manière avantageuse, les passages de roue 16 comprennent des pare-boues (non représentés). Un pare-boue forme un écran, un bouclier, interceptant les projections. Il participe à l'étanchéité à l'eau.

Au moins un ou chaque passage de roue 16 est délimité par un élément de carrosserie, telle une aile latérale 18. L'aile latérale 18 forme la surface externe du véhicule automobile 10. Elle se prolonge jusqu'à une peau de pare-chocs 20. La peau de pare-chocs 20 peut comprendre plusieurs panneaux de pare-chocs. Les ailes latérales 18, les peaux de pare-chocs 20 et une partie de la structure 12 forment partiellement la carrosserie 22 du véhicule automobile 10. La carrosserie 22 forme l'enveloppe extérieure du véhicule automobile 10. Elle est en contact du flux d'air environnant lors de la circulation du véhicule automobile 10.

Chaque aile latérale 18 présente un bord arqué 24. Le bord arqué 24 est concave. Il délimite le passage de roue 16. Le bord arqué 24 entoure la roue 14 associée. L'élément d'habillage 26 comprend une face externe formant la carrosserie 22. Le bord arqué 24 se prolonge sur la peau de pare-chocs 20.

Au moins un ou chaque bord arqué 24 est équipé d'un élément d'habillage 26. L'élément d'habillage 26 épouse le bord arqué 24. Il le protège contre des chocs transversaux. Il le rigidifie. L'élément d'habillage 26 évite les éraflures sur le bord arqué 24 et évite l'abrasion de la peinture.

Le véhicule automobile 10 peut par exemple être un véhicule automobile particulier ou un véhicule automobile utilitaire.

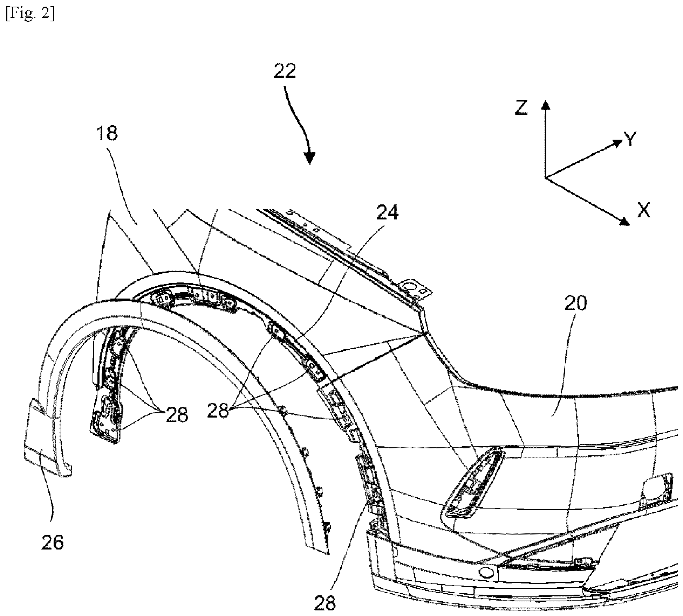

La figure 2 représente l'assemblage d'un l'élément d'habillage 26 sur un bord arqué 24 de passage de roue de véhicule automobile. Le véhicule automobile peut correspondre à celui présenté en relation avec la figure 1. L'élément d'habillage 26 s'intègre dans la carrosserie 22.

Le bord arqué 24 est matérialisé sur l'aile latérale 18 et la peau de pare-chocs 20. Le bord arqué 24 forme un creux orienté vers le bas. Il est généralement concentrique avec la roue associée (non représentée). Le pare-boue (non représenté) y est fixé. Le pare-boue, en forme de coquille, comprend une tranche courbe fixée au bord arqué 24.

L'élément d'habillage 26 comprend un premier matériau différent d'un deuxième matériau formant l'aile latérale 18. Préférentiellement, l'aile latérale 18 comprend du métal, et l'élément d'habillage 26 comprend du plastique. Le premier matériau comprend une première densité inférieure à une deuxième densité du deuxième matériau. La différence de matériau permet également de bénéficier de différentes limites élastiques, de différentes duretés. Ainsi, en tant que telle, la différence de matériaux apporte plusieurs avantages.

L'aile latérale 18 comprend une pluralité d'orifices de montage 28. Les orifices de montage 28 traversent l'aile latérale 18 et la peau de pare-chocs 20. Les orifices de montage 28 sont répartis suivant une courbe, le long du bord arqué 24. L'élément d'habillage 26 comprend un crochet de positionnement (non représenté) accroché à l'un desdits orifices de montage 28. Le crochet de positionnement est accroché à la peau de pare-chocs 20, et/ou est à distance de l'aile latérale 18.

Le présent élément d'habillage 26 est un élément d'habillage avant gauche. Toutefois, le présent enseignement s'applique à un élément d'habillage arrière, et aux éléments d'habillage de droite par symétries.

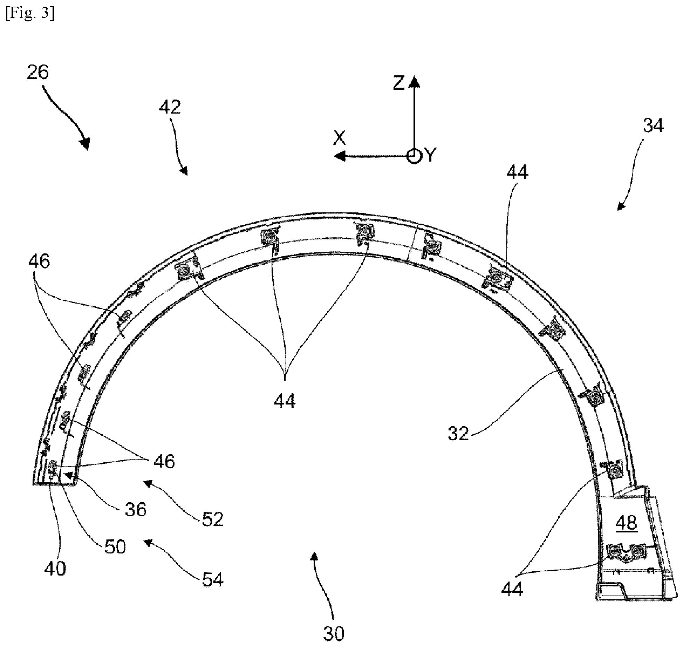

La figure 3 présente un élément d'habillage 26 de véhicule automobile. Le véhicule automobile peut correspondre à celui présenté en relation avec l'une des figures 1 à 2. L'élément d'habillage 26 est vu de l'intérieur afin d'exposer sa face interne 30 formée par son corps arqué 32. L'élément d'habillage 26 comprend en outre une face externe transversalement opposée à la face interne 30.

Le corps arqué 32 est destinée à longer le bord arqué du passage de roue (non représenté). Le corps arqué 32 est plein. Il peut comprendre deux matériaux. L'élément d'habillage 26, également appelé enjoliveur ou pièce de finition, comprend des moyens de fixation 34. Les moyens de fixation 34 sont formés sur la face interne 30. Les moyens de fixation 34 font saillie sur la face interne 30. Les moyens de fixation 34 sont répartis le long du corps arqué 32. Ils sont répartis angulairement. Les moyens de fixation 34 présentant une extrémité verticale 36. L'extrémité verticale 36 des moyens de fixation 34 comprend un crochet de positionnement 40. Le crochet de positionnement 40 assure au moins un positionnement vertical lorsqu'il est accroché au bord arqué formant un support de positionnement. Le crochet de positionnement 40 permet également une rétention transversale vers l'extérieur, préférentiellement vers l'intérieur. Par rétention on entend un arrêt, une buté.

Les moyens de fixation 34 comprennent une pluralité de pattes de fixation 42. Les pattes de fixation 42 s'étendent transversalement vers l'intérieur. Les moyens de fixation 34 et/ou les pattes de fixation 42 comprennent des plots de fixation 44 et des languettes de fixation 46. Le crochet de positionnement est formé sur l'une des languettes de fixation 46. Le crochet de positionnement 40 est à distance de la série de plots de fixation 44. Préférentiellement, les languettes de fixation 46 sont inclinées les unes par rapport aux autres. Elles sont parallèles ou généralement tangentes au bord arqué.

Selon un mode de réalisation de l'invention, les plots de fixation 44 sont destinés à être fixés à l'aile latérale ; et des languettes de fixation 46 sont destinés à être fixées à la peau de pare-chocs. Les plots de fixation 44 sont plus épais que les languettes de fixation 46. Ainsi, les languettes de fixation 46 sont plus souples.

La pluralité de languettes de fixation 46 comprend une première languette de fixation 50. Le crochet de positionnement 40 est formé sur ladite première languette de fixation 50. La première languette de fixation 50 est plus généralement une languette de fixation de référence. La première languette de fixation 50 est à une extrémité de la pluralité de languettes de fixation 46. A cette position, le crochet apporte une aide au positionnement de la pluralité de languettes de fixation 46 qui suivent, ou plus généralement à la succession de moyens de fixation 34 qui la suivent.

La pluralité de pattes de fixation 42 comprenant une patte de fixation de référence, telle la première languette de fixation 50. La patte de fixation de référence est également appelée première patte de fixation ou patte de fixation pilote. Le crochet de positionnement 40 est formé sur ladite patte de fixation de référence.

La au moins une extrémité verticale 36 comprend au moins une extrémité inférieure 52. ; préférentiellement la au moins une extrémité inférieure comprend une extrémité inférieure avant et une extrémité inférieure arrière 48. Le crochet de positionnement 40 est un crochet de positionnement avant à l'extrémité inférieure avant 54.

Plus généralement, l'extrémité verticale 36 est une extrémité des moyens de fixation. Elle peut être une extrémité longitudinale, par exemple une extrémité avant. Plus généralement, l'extrémité inférieure avant est une extrémité avant.

Selon une alternative ou une option de l'invention, le crochet de positionnement comprend un crochet de positionnement arrière à l'extrémité inférieure arrière. Le crochet de positionnement est alors scindé en une partie avant et une partie arrière.

Selon une alternative de l'invention, l'extrémité verticale est une extrémité supérieure ; le crochet de positionnement étant agencé à ladite extrémité supérieure. L'extrémité supérieure forme le sommet des moyens de fixation, les moyens de fixation étant audit sommet.

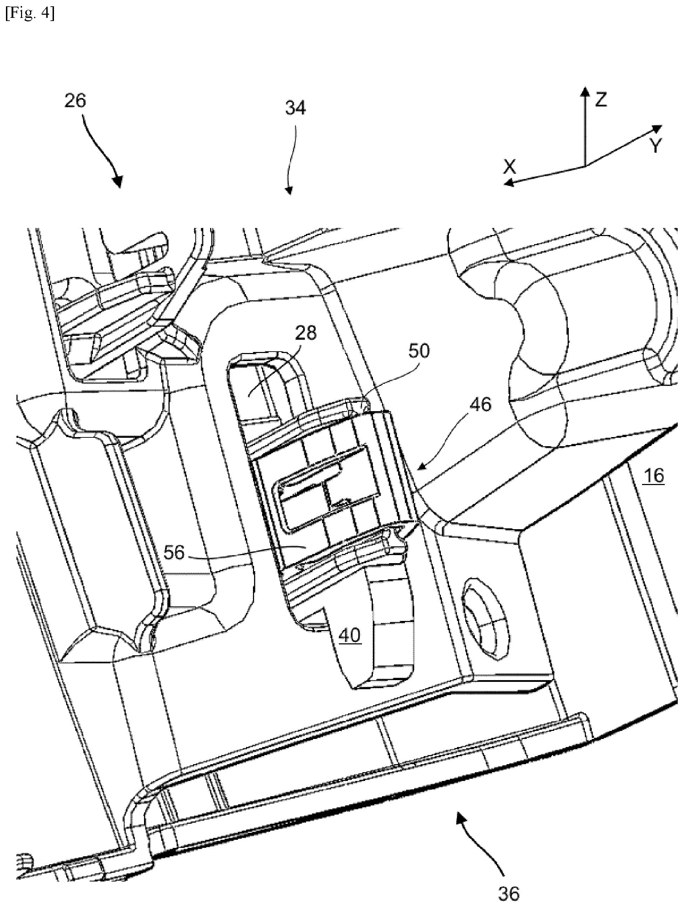

La figure 4 présente un crochet de positionnement 40 d'un élément d'habillage 26 engagé dans un orifice de montage 28 de passage de roue de véhicule automobile. Le véhicule automobile peut correspondre à celui présenté en relation avec l'une des figures 1 à 3.

L'extrémité verticale 36 des moyens de fixation 34 comprend un crochet de positionnement 40 ouvert vers le bas afin de positionner verticalement l'élément d'habillage 26 par rapport à l'orifice de montage 28 du passage de roue 16 lors de l'assemblage dudit élément d'habillage 26.

Ainsi, lors du montage, l'élément d'habillage 26 est accosté contre le passage de roue 16 formant un support de fixation. Ces premières étapes sont réalisées en présentant l'élément d'habillage 26 avec une inclinaison par rapport au passage de roue 16. L'élément d'habillage 26 est incliné par rapport à la direction verticale. Ainsi, certains moyens de fixation 34 restent à distances des orifices de montage 28 associés. Le crochet de positionnement 40 est alors inséré transversalement dans l'orifice de montage 28, et l'élément d'habillage 26 est en appui grâce à son crochet de positionnement 40. Cette position intermédiaire permet un indexage en position des moyens de fixation, et en particulier leur mise en correspondance avec les orifices de montage 28. Ensuite, l'élément d'habillage 26 est redressé. Il bascule sur son crochet de positionnement 40, suivant un axe longitudinal. L'élément d'habillage 26 est appliqué contre le passage de roue 16, ce qui permet d'engager tous les moyens de fixation 34 dans les orifices de montage 28 correspondants.

Ainsi, l'opération d'assemblage dispense l'opérateur d'effectuer un contrôle visuel de la coïncidence des moyens de fixation 34 avec les orifices de montage 28 puisque l'appui sur le crochet de positionnement 40 traduit déjà un positionnement conforme. L'invention apporte par là un gain en matière d'ergonomie. Elle réduit le temps de montage, et évite certains défauts de montage.

Les moyens de fixation 34 comprennent une lame élastique 56. La lame élastique 56 comprend une butée élastique. La lame élastique 56 coopère avec l'orifice de montage 28 en vue d'assurer une rétention de la languette de fixation 46 ; en l'occurrence la première languette de fixation 50. Selon un mode de réalisation, la lame élastique 56 est formée par une agrafe de fixation. Elle peut être en métal, par exemple en acier. Elle est fixée sur la première languette de fixation 50. Le crochet de positionnement 40 est ouvert vers l'opposé de la lame élastique 56.

En d'autres termes, la au moins une extrémité comprend au moins un crochet de positionnement transversal. Le crochet de positionnement transversal étant ouvert verticalement vers le bas afin de supporter et positionner ledit élément d'habillage lors de son accostage contre le bord arqué du passage de roue.

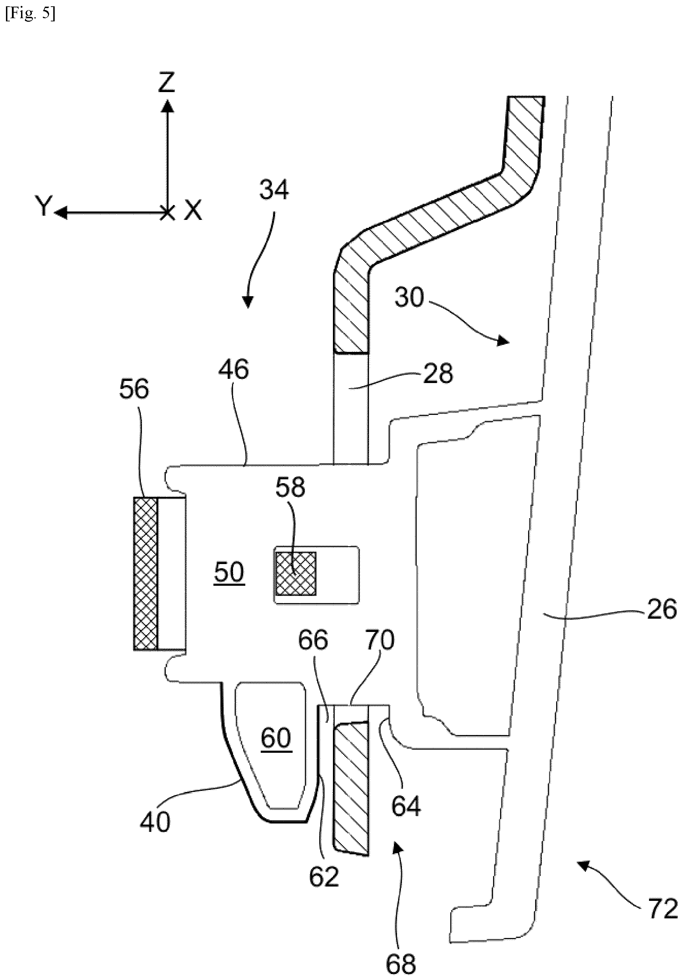

La figure 5 représente une coupe d'un crochet de positionnement 40 d'élément d'habillage 26 de carrosserie de véhicule automobile. Le véhicule automobile peut correspondre à celui présenté en relation avec l'une des figures 1 à 4. La lame élastique 56 est liée aux moyens de fixation 34 grâce à une plaquette de verrouillage 58.

Le crochet de positionnement 40 comprend un évidement central 60. L'évidement central 60 apporte une souplesse qui facilite l'introduction de la patte de fixation, en l'occurrence de languette de fixation 46 dans l'orifice de montage 28. L'orifice de montage 28 est également appelé pilote. Dans le présent mode de réalisation, la languette de fixation 46 est la première languette de fixation 50 telle une languette de fixation inférieure.

L'évidement central 60 peut être une cavité. Il peut être borgne. C'est-à-dire qu'il est non traversant. Il comprend une paroi d'obturation. Préférentiellement, l'évidement central 60 s'étend sur au moins une moitié verticale du crochet de positionnement 40. Il apporte un compromis entre la masse et la souplesse.

Le crochet de positionnement 40 comprend une butée interne 62 et une butée externe 64 transversalement opposée à la buté interne 62. La butée interne 62 est verticalement plus haute que la buté externe 64, préférentiellement au moins deux fois plus haute. La buté interne 62 assure une rétention. La buté externe 64 permet un positionnement transversal vers l'intérieur.

Le crochet de positionnement 40 comprend une gorge de positionnement 66 avec une entrée inférieure 68 et un fond 70, au-dessus de l'entrée inférieure 68. Le fond 70 est horizontal. Cet agencement optimise la stabilité du crochet de positionnement 40. Les moyens de fixation 34 s'étendent depuis la face interne 30, à l'opposé de la face externe 72.

Selon un mode de réalisation préféré, le crochet de positionnement est réalisé en un matériau plastique ou composite. Le matériau plastique peut comprendre un matériau thermoplastique ou un matériau thermodurcissable. Selon un mode de réalisation préféré, le matériau plastique est sélectionné dans le groupe comprenant les résines polypropylène, polyamide, polyphtalamide, polyetherethercétone, polysulfure de phénylène, polyamide-imide, polyetherimide, polyarylamide, polyépoxyde, polyester insaturés, vinylester ou polyester-vinylester. Par exemple, le matériau composite comprend une matrice en un matériau plastique tel que décrit ci-dessus avec un renfort. Par exemple, le renfort comprend des fibres de verre ou de carbone.

Le crochet de positionnement comprend au moins 10% en poids de matériau plastique recyclé basé sur le poids total du matériau plastique ; de préférence de 10 à 80% en poids ; plus préférentiellement de 20% à 60% en poids ou de 30% à 40% en poids. L'emploi de matériau plastique recyclé diminue l'empreinte écologique du véhicule.

L'invention comprend la combinaison de tous les modes de réalisation illustrés par toutes les figures.

Les figures 2 à 5 sont des vues isométriques. Elles respectent chacune une échelle spécifique, des angles réels et des proportions réelles.

## Revendications

1. Elément d'habillage (26) de bord arqué (24) de passage de roue (16) de véhicule automobile (10), l'élément d'habillage (26) comprenant : un corps arqué (32) présentant une face externe (72) et une face interne (30) destinée à longer le bord arqué (24) de passage de roue (16) ; des moyens de fixation (34) répartis le long du corps arqué (32) sur la face interne (30) ; lesdits moyens de fixation (34) présentant une extrémité verticale (36) ; l'extrémité verticale (36) des moyens de fixation (34) comprenant un crochet de positionnement (40) ouvert verticalement vers le bas afin de positionner verticalement l'élément d'habillage (26) par rapport à un orifice de montage (28) du passage de roue (16) lors de l'assemblage dudit élément d'habillage (26), **caractérisé en ce que** le crochet de positionnement (40) comprend un évidement central (60) ; préférentiellement l'évidement central (60) s'étend sur au moins une moitié verticale du crochet de positionnement (40).

2. Elément d'habillage (26) selon la revendication 1, **caractérisé en ce que** les moyens de fixation (34) comprennent une lame élastique (56) destinée à coopérer avec l'orifice de montage (28) du passage de roue (16), le crochet de positionnement (40) étant ouvert vers l'opposé de la lame élastique (56) ; préférentiellement la lame élastique (56) comprend une agrafe de fixation.

3. Elément d'habillage (26) selon l'une des revendications 1 ou 2, **caractérisé en ce que** la au moins une extrémité verticale (36) est au moins une extrémité inférieure (52) ; préférentiellement la au moins une extrémité inférieure (52) comprend une extrémité inférieure avant (54) et une extrémité inférieure arrière (48), le crochet de positionnement (40) est un crochet de positionnement avant à l'extrémité inférieure avant (54) ou un crochet de positionnement arrière à l'extrémité inférieure arrière (48).

4. Elément d'habillage (26) selon l'une des revendications 1 à 3, **caractérisé en ce que** les moyens de fixation (34) comprennent une pluralité de languettes de fixation (46), la pluralité de languettes de fixation (46) comprenant une première languette de fixation (50), le crochet de positionnement (40) étant formé sur ladite première languette de fixation (50) ; préférentiellement, les languettes de fixation (46) sont inclinées les unes par rapport aux autres.

5. Elément d'habillage (26) selon l'une des revendications 1 à 4, **caractérisé en ce que** le crochet de positionnement (40) comprend une butée interne (62) et une butée externe (64), la butée interne (62) étant verticalement plus haute que la buté externe (64).

6. Elément d'habillage (26) selon l'une des revendications 1 à 5, **caractérisé en ce que** les moyens de fixation (34) comprennent une série de plots de fixation (44), le crochet de positionnement (40) étant à distance de la série de plots de fixation (44).

7. Elément d'habillage (26) selon l'une des revendications 1 à 6, **caractérisé en ce que** le crochet de positionnement (40) comprend une gorge de positionnement (66) avec une entrée inférieure (68) et un fond (70) au-dessus de l'entrée inférieure (68).

8. Véhicule automobile (10) comprenant : une carrosserie (22) ; un passage de roue (16) avec un bord arqué (24) ; un élément d'habillage (26) du bord arqué (24) ; **caractérisé en ce que** l'élément d'habillage (26) est conforme à l'une des revendications 1 à 7 ; préférentiellement l'élément d'habillage (26) comprend un premier matériau différent d'un deuxième matériau formant la carrosserie (22).

9. Véhicule automobile (10) selon la revendication 8, **caractérisé en ce que** la carrosserie (22) comprend une pluralité d'orifices de montage (28) répartis le long du bord arqué (24), le crochet de positionnement (40) étant accroché à l'un desdits orifices de montage (28) ; préférentiellement, la carrosserie (22) comprend une aile latérale (18) et une peau de pare-chocs (20) formant le bord arqué (24), le crochet de positionnement (40) étant accroché à la peau de pare-chocs (20).

## Patentansprüche

1. Verkleidungselement (26) für die bogenförmige Kante (24) des Radkanals (16) eines Kraftfahrzeugs (10), wobei das Verkleidungselement (26) umfasst: einen bogenförmigen Körper (32) mit einer Außenfläche (72) und einer Innenfläche (30) zum Laufen der bogenförmigen Kante (24) des Radkanals (16); Befestigungsmittel (34), die entlang des bogenförmigen Körpers (32) auf der Innenfläche (30) verteilt sind; wobei die Befestigungsmittel (34) Ein vertikales Ende (36); das vertikale Ende (36) der Befestigungsmittel (34) umfasst einen Positionierhaken (40), der vertikal nach unten offen ist, um das Verkleidungselement (26) vertikal in Bezug auf eine Montageöffnung (28) des Raddurchgangs (16) zu positionieren, wenn das Verkleidungselement (26) montiert wird, **dadurch gekennzeichnet, dass** der Positionierhaken (40) eine zentrale Ausnehmung (60) umfasst; vorzugsweise erstreckt sich die zentrale Ausnehmung (60) über mindestens eine vertikale Hälfte des Hakens Positioniervorrichtung (40).

2. Verkleidungselement (26) nach Anspruch 1, **dadurch gekennzeichnet, dass** die Befestigungsmittel (34) eine elastische Klinge (56) umfassen, die mit der Montageöffnung (28) des Radkanals (16) zusammenwirken soll, wobei der Positionierhaken (40) gegenüber der elastischen Klinge (56) offen ist; vorzugsweise die elastische Klinge (56) eine Befestigungsklammer umfasst.

3. Verkleidungselement (26) nach einem der Ansprüche 1 oder 2, **dadurch gekennzeichnet, dass** das mindestens eine vertikale Ende (36) mindestens ein unteres Ende (52) ist; vorzugsweise das mindestens eine untere Ende (52) ein vorderes unteres Ende (54) und ein hinteres unteres Ende (48) umfasst, wobei der Positionierhaken (40) ein vorderer Positionierhaken am vorderen unteren Ende (54) oder ein hinterer Positionierhaken am hinteren unteren Ende (48) ist.

4. Verkleidungselement (26) nach einem der Ansprüche 1 bis 3, **dadurch gekennzeichnet, dass** die Befestigungsmittel (34) eine Vielzahl von Befestigungszungen (46) umfassen, wobei die Vielzahl von Befestigungszungen (46) eine erste Befestigungszunge (50) umfasst, wobei der Positionierhaken (40) an der ersten Befestigungszunge (50) ausgebildet ist; vorzugsweise die Befestigungszungen (46) zueinander geneigt sind.

5. Verkleidungselement (26) nach einem der Ansprüche 1 bis 4, **dadurch gekennzeichnet, dass** der Positionierhaken (40) einen inneren Anschlag (62) und einen äußeren Anschlag (64) umfasst, wobei der innere Anschlag (62) vertikal höher als der äußere Anschlag (64) ist.

6. Verkleidungselement (26) nach einem der Ansprüche 1 bis 5, **dadurch gekennzeichnet, dass** die Befestigungsmittel (34) eine Reihe von Befestigungsklötzen (44) umfassen, wobei der Positionierhaken (40) von der Reihe von Befestigungsklötzen (44) beabstandet ist.

7. Verkleidungselement (26) nach einem der Ansprüche 1 bis 6, **dadurch gekennzeichnet, dass** der Positionierhaken (40) eine Positioniernut (66) mit einem unteren Einlass (68) und einem Boden (70) über dem unteren Einlass (68) umfasst.

8. Kraftfahrzeug (10), umfassend: eine Karosserie (22); einen Radkanal (16) mit einer bogenförmigen Kante (24); ein Verkleidungselement (26) der bogenförmigen Kante (24); **dadurch gekennzeichnet, dass** das Verkleidungselement (26) einem der Ansprüche 1 bis 7 entspricht; vorzugsweise das Verkleidungselement (26) ein erstes Material umfasst, das sich von einem zweiten Material unterscheidet, das die Karosserie (22) bildet.

9. Kraftfahrzeug (10) nach Anspruch 8, **dadurch gekennzeichnet, dass** die Karosserie (22) eine Vielzahl von Montageöffnungen (28) aufweist, die entlang der gekrümmten Kante (24) verteilt sind, wobei der Positionierhaken (40) mit einer der Montageöffnungen (28) in Eingriff steht; wobei vorzugsweise die Karosserie (22) einen Seitenschenkel (18) und eine Stoßstangenhaut (20) aufweist, die die gekrümmte Kante (24) bildet, wobei der Positionierhaken (40) An der Stoßfängerhaut (20) festgehalten.

## Claims

1. Motor vehicle wheel arch trim (26) element (24), the trim item (26) comprising: an arched body (32) having an outer face (72) and an inner face (30) intended to run along the arched wheel arch (16) edge (24); fastening means (34) distributed along the arched body (32) on the inner face (30); said fastening means (34) having a vertical end (36); the vertical end (36) of the fastening means (34) comprising a positioning hook (40) which is vertically downwardly open in order to position the trim item (26) vertically by report (26) an assembly line (28) of the wheel arch (16) during assembly of said trim item (26), wherein the positioning hook (40) comprises a centre recess (60); preferably the centre recess (60) extends over at least one vertical half of the positioning hook (40).

2. Cladding element (26) according to claim 1, wherein the fixing means (34) comprise an elastic blade (56) intended to cooperate with the assembly line orifice (28) of the wheel arch (16), the positioning hook (40) being open towards the opposite of the elastic blade (56); preferably the elastic blade (56) comprises a fixing clip.

3. Cladding element (26) according to either of Claims 1 or 2, wherein the at least one vertical end (36) is at least one lower end (52); preferably the at least one lower end (52) comprises a front lower end (54) and a rear lower end (48), the positioning hook (40) is a front positioning hook at the front lower end (54) or a rear positioning hook at the rear lower end (48).

4. Cladding element (26) according to one of Claims 1 to 3, **characterised in that** the fixing means (34) comprise a plurality of fixing tongues (46), the plurality of fixing tongues (46) comprising a first fixing tongue (50), the positioning hook (40) being formed on said first fixing tongue (50); preferably, the fixing tongues (46) are inclined to one another by report.

5. Cladding element (26) according to one of Claims 1 to 4, **characterised in that** the positioning hook (40) comprises an inner stop (62) and an outer stop (64), the inner stop (62) being vertically higher than the outer stop (64).

6. Cladding element (26) according to one of Claims 1 to 5, **characterised in that** the fixing means (34) comprise a series of fixing studs (44), the positioning hook (40) being at a distance from the series of fixing studs (44).

7. Cladding element (26) according to one of Claims 1 to 6, wherein the positioning hook (40) comprises a positioning groove (66) with a lower entry (68) and a bottom (70) above the lower entry (68).

8. Motor vehicle (10) comprising: a bodywork (22); a wheel arch (16) with an arched rim (24); a trim item (26) of the arched rim (24); wherein the trim item (26) conforms to one of Claims 1 to 7; preferably the trim item (26) comprises a first material different from a second material forming the bodywork (22).

9. Motor vehicle (10) according to Claim 8, wherein the bodywork (22) comprises a plurality of assembly line orifices (28) distributed along the arched rim (24), the positioning hook (40) being attached to one of said assembly line orifices (28); preferably, the bodywork (22) comprises a lateral wing (18) and a bumper skin (20) forming the arched rim (24), the positioning hook (40) being attached to the bumper skin (20).
